**Europäisches Patentamt**

(19) **European Patent Office**

**Office européen des brevets**

(11) Veröffentlichungsnummer: **0 075 797**
**B1**

(12) **EUROPÄISCHE PATENTSCHRIFT**

(45) Veröffentlichungstag der Patentschrift:
**16.12.87**

(21) Anmeldenummer: **82108564.4**

(22) Anmeldetag: **16.09.82**

(51) Int. Cl.⁴: **F 26 B 21/00,** F 26 B 7/00,
F 26 B 23/08, F 26 B 25/00

(54) **Kapazitiver Hochfrequenztrockner.**

(30) Priorität: **29.09.81 DE 3138706**

(43) Veröffentlichungstag der Anmeldung:
**06.04.83 Patentblatt 83/14**

(45) Bekanntmachung des Hinweises auf die Patenterteilung:
**16.12.87 Patentblatt 87/51**

(84) Benannte Vertragsstaaten:
**CH FR GB IT LI**

(56) Entgegenhaltungen:
**CH-A-179 825**
**DE-A-1 729 299**
**DE-A-2 817 067**
**DE-C-2 757**
**DE-C-955 309**
**GB-A-13 162**
**US-A-4 134 216**

(73) Patentinhaber: **Siemens Aktiengesellschaft Berlin und München, Wittelsbacherplatz 2, D-8000 München 2 (DE)**

(72) Erfinder: **Grassmann, Hans- Christian, An den Eichen 18, D-8521 Igelsdorf (DE)**

EP 0 075 797 B1

LIBER, STOCKHOLM 1987

## Beschreibung

Die Erfindung bezieht sich auf einen kapazitiven Hochfrequenztrockner nach dem Oberbegriff des Anspruches 1. Mit diesem Oberbegriff wird auf eine Anordnung Bezug genommen, wie sie beispielsweise näher in der DE-OS 28 17 067 beschrieben ist. Trockenvorrichtungen dieser Art haben sich gut bewährt. Durch die zusätzliche Einblasung von Heißluft wird die Trocknung vergleichmäßigt und der aus dem feuchtehaltigen Gut austretende Dampf wird abgeführt.

Durch die Heißluft wird auch eine Dampfkondensation im Ofen verhindert, die zu elektrischen Überschlägen führen kann (vgl. z. B. auch K.Kröll, Trocknungstechnik, Springer Verlag 1978, Band 2, Seite 425). Im Rahmen derartiger Trockner ist es auch bekannt, den Kühlluftstrom der Generatorröhren zur weiteren Nutzung der aufgenommenen Wärme in den Ofen zu drücken. (Vgl. Trocknungstechnik, Seite 423). Weiterhin ist es bekannt, bei Trocknern die Wärmeenergie der Abluft, des austretenden Gutes oder eines Antriebes zum Aufwärmen von Frischluft oder in anderer Weise zu nutzen. (Vgl. Trocknungstechnik, Band 2, Seite 6 oder DE-A-1 729 299).

Die Aufgabe der vorliegenden Erfindung besteht darin, die energetische Gesamtausnutzung des eingangs genannten, speziellen kapazitiven Trocknungssystems zu verbessern. Diese Aufgabe wird erfindungsgemäß durch die Kombination der kennzeichnenden Markmale des Anspruches 1 gelöst. Auf diese Weise kann ein großer Teil der durch die Heizvorrichtung bzw. durch die dielektrische Erwärmung erzeugten Energie zusätzlich nutzbar gemacht werden, z. B. zur Erwärmung von Brauchwasser verwendet werden. Dies ist vor allem für Industrien von Bedeutung, bei denen erhebliche Mengen heißen Wassers benötigt werden, wie z. B. in der Textilindustrie. Bei einem luftgekühlten Hochfrequenzgenerator wird die Luft für den Ofenraum vorteilhafterweise aus der Kühlabluft des Hochfrequenzgenerators entnommen, dagegen bei einem wassergekühlten Generator die Ofenluft zunächst mittels eines Wärmetauschers im Kühlwasserkreislauf des Generators vorgewärmt.

Vorteilhafterweise werden ferner Generatoren, Wärmetauscher und Heizvorrichtung baulich mit dem Ofen vereinigt und isoliert, damit Wärmeverluste durch lange Leitungen oder dergleichen möglichst vermieden werden.

Anhand eines in der Zeichnung dargestellten Ausführungsbeispiels sei die Erfindung näher erläutert; es zeigen:

Figur 1 ein Energieflußschema bei einem luftgekühlten Hochfrequenzgenerator und

Figur 2 das Energieflußschema bei einem wassergekühlten Hochfrequenzgenerator.

Die kapazitive Hochfrequenztrockenvorrichtung besteht im wesentlichen aus einem Ofen 1 mit den an Hochfrequenz angeschlossenen Elektroden 11, in dem das Gut 12 auf die erforderliche Temperatur aufgeheizt wird. Erfindungsgemäß ist folgender Energiefluß vorgesehen:

Die den Hochfrequenzgeneretor 2 zwecks Kühlung durchströmende Luft 3 von etwa 20°C wird durch die Verlustwärme des Generators auf ungefähr 60°C aufgeheizt. Ein Teilluftstrom 52 dieser Luft 5 wird über eine Heizvorrichtung 3 geführt, die z. B. mit Gas, Öl oder elektrisch beheizt sein kann. Die in dieser Heizvorrichtung 3 auf etwa 110°C erwärmte Luft wird dann mittels des Ventilstors 41 in den Ofen 1 gedrückt, vergleichmäßigt hier die Temperatur und wird zusammen mit den bei der Hochfrequenzerwärmung anfallenden Dampfschwaden mittels eines Ventilators 42 aus dem Ofen mit einer Temperatur T von z. B. 105°C wieder abgesaugt. Die mit dem Dampf beladene Luft gelangt dann in einen Wärmetauscher 8 und strömt von hier aus ins Freie. Die Lufttemperatur im Ofen 1 wird an einer Meßstelle 13 erfaßt und mittels einer der Heizvorrichtung 3 zugeordneten Heizregeleinrichtung 31 auf einen derartigen Wert gehalten, daß die Kondensationstemperatur des mitgeführten Dampfes vor dem Wärmetauscher 8 nicht unterschritten wird. Im Wärmetauscher 8 wird dann vor allem durch die Kondensationswärme des mitgeführten Dampfes Wasser 6 von z. B. 40°C auf 90°C erwärmt. Das Wasser 6 ist seinerseits bereits wieder durch die Abwärme des Hochfrequenzgenerators 2 vorgewärmt, und zwar durch einen zweiten Teilluftstrom 51, der den Wärmetauscher 23 durchströmt.

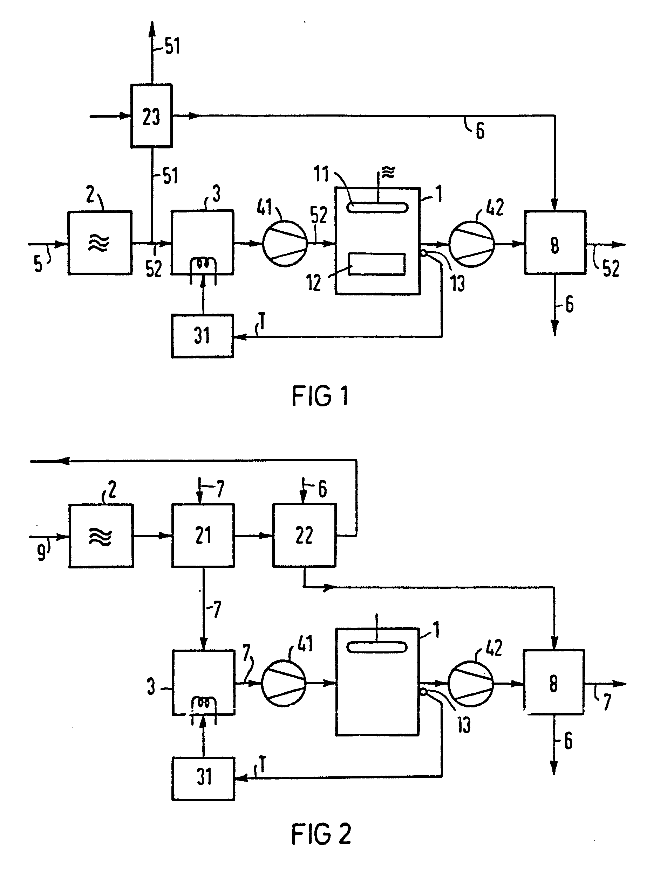

Bei der Anordnung nach Figur 2 ist im Kreislauf des Kühlwassers 9 des Hochfrequenzgenerators 2 ein Wärmetauscher 21 vorgesehen, mit dem Raumluft 7 auf z. B. 70°C erwärmt wird und dann über die Heizvorrichtung 3 dem Ofen 1 zugeführt wird. Zusätzlich ist noch im Kühlwasserkreislauf ein Wärmetauscher 22 vorgesehen, in dem das Wasser 6 vorgewärmt wird, bevor es zum Wärmetauscher 8 gelangt. Um die Wassertemperatur konstant zu halten, ist ferner noch eine - nicht dargestellte - Wassermengenregelung vorzusehen.

Bei den beiden geschilderten Anordnungen läßt sich die insgesamt nutzbare Energie wesentlich erhöhen, z. B. bei dem angegebenen Beispiel ist es bei einer abgegebenen HF-Ofenleistung von 70 KW und 20 KW Heizleistung der Heizvorrichtung 3 bei einer Anschlußleistung von 750 KW ohne weiteres möglich, in den Wärmetauschern 8 und 23 wieder 90 KW Leistung zur Brauchwassererhitzung zurückzugewinnen.

## Patentansprüche

1. Kapazitiver Hochfrequenztrockner für feuchtehaltiges Gut (12), bei dem die Elektroden (11) im Ofen (1) an einen gekühlten Hochfrequenzgenerator (2) angeschlossen sind und zusätzlich mittels einer steuerbaren Heizvorrichtung (3) temperaturgeregelt erhitzte Luft von über 100°C in den Ofen einblasbar und aus diesem wieder absaugbar ist, dadurch gekennzeichnet, daß Mittel zum Vorheizen der Luft (52, 7) vor deren Durchtritt durch die Heizvorrichtung (3) durch die bei der Kühlung des Hochfrequenzgenerators (2) anfallende Abwärme vorgesehen sind, daß die Luft (52, 7) nach ihrer Abführung aus dem Ofen (1) über einen Wärmetauscher (8) zur Abgabe von Wärme an ein vom Trockner unabhängiges zweites strömendes Medium (6) geführt ist, daß die Heizvorrichtung (3) mittels einer Regeleinrichtung (31) in Abhängigkeit von der Ofenlufttemperatur derart steuerbar ist, daß erst im Wärmetauscher (8) die Kondensationstemperatur des durch die Luft mitgeführten Dampfes unterschritten wird, und daß das zweite Medium (6) zusätzlich durch die Abwärme des Hochfrequenzgenerators (2) vorgeheizt ist.

2. Kapazitiver Hochfrequenztrockner nach Anspruch 1 mit einem luftgekühlten Hochfrequenzgenerator, dadurch gekennzeichnet, daß die Luft (52) für den Ofen (1) aus der Kühlabluft des Hochfrequenzgenerators (2) entnehmbar ist.

3. Kapazitiver Hochfrequenztrockner nach Anspruch 1 mit einem wassergekühlten Hochfrequenzgenerator, dadurch gekennzeichnet, daß die Ofenluft (7) zunächst über einen im Kühlwasserablauf des Hochfrequenzgenerators (2) angeordneten Wärmetauscher (21) geführt ist.

4. Kapazitiver Hochfrequenztrockner nach Anspruch 1, dadurch gekennzeichnet, daß Hochfrequenzgenerator (2), Wärmetauscher (23, 8) und Heizvorrichtung (3) baulich mit dem Ofen (1) vereinigt sind.

5. Kapazitiver Hochfrequenztrockner nach Anspruch 1, dadurch gekennzeichnet, daß eine Mengenregelung des zweiten Mediums (6) zur Konstanthaltung seiner Temperatur vorgesehen ist.

## Claims

1. A capacitive high-frequency dryer for moisture-containing goods (12), in which the electrodes (11) in the furnace (1) are connected to a cooled high-frequency generator (2) and in which, in addition, air, heated to above 100°C in temperature-controlled fashion by means of a controllable heating device (3), can be blown into the furnace and sucked out again therefrom, characterised in that means are provided for preheating the air (52, 7) prior to is passage through the heating device (3) by means of the waste heat which is produced during the cooling of the high-frequency generator (2); that after having been discharged from the furnace (1), the air (52, 7) is led through a heat exchanger (8) to give up heat to a second flowing medium (6) which is independent of the dryer; that the heating device (3) can be controlled by means of a regulating device (31) in dependence upon the furnace air temperature, in such manner that only in the heat exchanger (8) does the temperature fall below the condensation temperature of the vapour carried by the air; and that the second medium (6) is additionally pre-heated by the waste heat of the high-frequency generator (2).

2. A capacitive high-frequency dryer as claimed in Claim 1 comprising an air-cooled high-frequency generator, characterised in that the air (52) for the furnace (1) can be derived from the exhaust cooling air from the high-frequency generator (2).

3. A capacitive high-frequency dryer as claimed in Claim 1 comprising a water-cooled high-frequency generator, characterised in that the furnace air (7) is first led through a heat exchanger (21) arranged in the cooling water cycle of the high-frequency generator (2).

4. A capacitive high-frequency dryer as claimed in Claim 1, characterised in that the high-frequency generator (2), heat exchanger (23, 8) and heating device (3) are structurally combined with the furnace (1).

5. A capacitive high-frequency dryer as claimed in Claim 1, characterised in that a quantity control of the second medium (6) is provided for keeping its temperature constant.

## Revendications

1. Séchoir capacitif à haute fréquence pour une substance humide (12), dans lequel les électrodes (11) situées dans le four (1) sont raccordées à un générateur à haute fréquence (2) refroidi et, en outre, de l'air, qui est à plus de 100°C est chauffé avec réglage de sa température au moyen d'un dispositif de chauffage commandable (3), peut être injecté par soufflage dans le four et en être évacué par aspiration, caractérisé par le fait qu'il est prévu des moyens pour réchauffer l'air (52,7) avant son passage dans le dispositif de chauffage (3), au moyen de la chaleur dissipée apparaissant lors du refroidissement des générateurs à haute fréquence (2), et après avoir été évacué du four (1), l'air (52,7) est envoyé dans un échangeur de chaleur (8) de manière à délivrer sa chaleur à un second milieu en écoulement (6), indépendant du séchoir, que le dispositif de chauffage (3) peut être commandé au moyen d'un dispositif de régulation (31) en fonction de la température de l'air extérieur de telle sorte que la température de l'air tombe, uniquement dans l'échangeur de chaleur (8), au-dessous de la température de condensation de la vapeur entraînée par l'air, et que le second milieu (6) est réchauffé en outre par la chaleur dissipée du générateur à haute fréquence (2).

2. Séchoir capacitif à haute fréquence suivant la revendication 1, comportant un générateur à haute fréquence refroidi par air, caractérisé par le fait que l'air (52) destiné au four (1) peut être prélevé dans l'air de refroidissement évacué du générateur à haute fréquence (2).

3. Séchoir capacitif à haute fréquence suivant la revendication 1, comportant un générateur à haute fréquence refroidi par eau, caractérisé par le fait que l'air extérieur (7) est envoyé tout d'abord dans un échangeur de chaleur (21) disposé dans le circuit d'eau de refroidissement du générateur à haute fréquence (2).

4. Séchoir capacitif à haute fréquence suivant la revendication 1, caractérisé par le fait que le générateur à haute fréquence (2), l'échangeur de chaleur (23,8) et le dispositif de chauffage (3) sont réunis, du point de vue construction, au four (1).

5. Séchoir capacitif à haute fréquence suivant la revendication 1, caractérisé par le fait qu'il est prévu une régulation quantitative du second milieu (6) afin de maintenir constante sa température.

FIG 1

FIG 2